(19) Europäisches Patentamt
European Patent Office
Office européen des brevets

(11) **EP 4 730 224 A1**

(12) **EUROPEAN PATENT APPLICATION**
published in accordance with Art. 153(4) EPC

(43) Date of publication:
**22.04.2026 Bulletin 2026/17**

(21) Application number: **24845299.7**

(22) Date of filing: **26.06.2024**

(51) International Patent Classification (IPC):
**G06Q 10/04** (2023.01)

(52) Cooperative Patent Classification (CPC):
**G06Q 10/04; H02J 3/00**

(86) International application number:
**PCT/JP2024/023158**

(87) International publication number:
**WO 2025/022917 (30.01.2025 Gazette 2025/05)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **25.07.2023 JP 2023120919**

(71) Applicant: **Panasonic Intellectual Property
Management Co., Ltd.
Kadoma-shi, Osaka 571-0057 (JP)**

(72) Inventor: **NOMURA, Kai
Kadoma-shi, Osaka 571-0057 (JP)**

(74) Representative: **Grünecker Patent- und
Rechtsanwälte
PartG mbB
Leopoldstraße 4
80802 München (DE)**

(54) **POWER DEMAND PREDICTION METHOD, POWER DEMAND PREDICTION DEVICE, AND POWER DEMAND PREDICTION PROGRAM**

(57)     A power demand prediction device outputs a period prediction value including a power demand prediction value for each unit time in a prediction period by inputting, to a trained model, input data including an actual weather value in a past from the prediction period, an actual power demand value in a past from the prediction period, and a weather forecast value in the prediction period for each of a plurality of unit times defining the prediction period, the weather forecast value being a value acquired for each of the plurality of unit times, and adopts the power demand prediction value output in a second unit time for the power demand prediction value in which the unit time overlaps between the period prediction value output in a first unit time and the period prediction value output in the second unit time after the first unit time among the plurality of unit times defining the prediction period.

FIG.1

## Description

### Technical Field

The present disclosure relates to a technique for predicting power demand of equipment.

### Background Art

Patent Literature 1 discloses a technique of extracting at least one power consumption element that affects power consumption, generating a relational model indicating a relationship between the power consumption amount summed for each of the extracted power consumption elements and the power consumption element, and calculating the power consumption amount by the generated relational model.

However, the above-described conventional technique does not disclose a trained model that predicts a power demand prediction value by using an actual weather value as an explanatory variable at the time of learning and using a weather forecast value as an explanatory variable at the time of prediction. Therefore, the conventional technique cannot suppress a prediction error that occurs when a power demand prediction value is calculated using such a trained model.

### Citation List

### Patent Literature

Patent Literature 1: JP 2016-185059 A

### Summary of Invention

The present disclosure has been made to solve such a problem, and an object of the present disclosure is to provide a technique capable of more accurately calculating a power demand prediction value.

A power demand prediction method according to an aspect of the present disclosure includes, by a computer, outputting a period prediction value including a power demand prediction value for each unit time in a prediction period by inputting, to a trained model, input data including an actual weather value in a past from the prediction period, an actual power demand value in a past from the prediction period, and a weather forecast value in the prediction period for each of a plurality of unit times defining the prediction period, the weather forecast value being a value acquired for each of the plurality of unit times, and adopting the power demand prediction value output in a second unit time for the power demand prediction value in which the unit time overlaps between the period prediction value output in a first unit time and the period prediction value output in the second unit time after the first unit time among the plurality of unit times defining the prediction period.

According to the present disclosure, a power demand prediction value can be calculated more accurately.

### Brief Description of Drawings

FIG. 1 is a block diagram illustrating an example of an overall configuration of a power demand prediction system according to an embodiment of the present disclosure.
FIG. 2 is an explanatory diagram of interpolation processing.
FIG. 3 is a diagram illustrating an outline of processing of the power demand prediction device.
FIG. 4 is a graph illustrating a relationship between a plurality of prediction periods.
FIG. 5 is a flowchart showing an example of processing of the power demand prediction device.
FIG. 6 is a flowchart illustrating an example of correction processing by a correction unit.
FIG. 7 is an explanatory diagram of correction processing.
FIG. 8 is a graph illustrating correction processing.
FIG. 9 is a flowchart illustrating an example of learning processing of a time-dependent predictor.

### Description of Embodiments

(Knowledge underlying present disclosure)

Studies have been conducted to calculate a power demand prediction value of equipment in a future prediction period by inputting a weather forecast value, a past actual power demand value of the equipment, and the like to a trained model. In this case, the trained model is generated by machine learning of training data in which the actual power demand value before the reference time point and the actual weather value before the reference time point are used as explanatory variables and the actual power demand value after the reference time point is used as an objective variable.

However, at the time of prediction, not the actual weather value but the weather forecast value in the prediction period is used as the explanatory variable in the trained model. Therefore, the error of the weather forecast value is added to the power demand prediction value calculated by the trained model, and the power demand prediction value is not accurately calculated.

In Patent Literature 1, the power consumption amount is calculated using a relational model, but this relational model is generated by expressing a log conversion value of the power consumption amount as a polynomial function for the power consumption element and calculating a coefficient for the polynomial function by a least squares method.

As described above, since the relational model described in Patent Literature 1 is not a model in which the actual weather value is used as an explanatory variable at the time of learning and the weather forecast value is used as an explanatory variable at the time of prediction, the problem that the error of the weather forecast value is added does not occur.

Generally, it is considered that the weather forecast value in the near future is more accurate, and thus, it is desirable to input the latest weather forecast value to the trained model.

Therefore, the present inventors have found that if a weather forecast value in a prediction period is acquired for each unit time defining the prediction period and a power demand prediction value in the prediction period is calculated for each unit time, the latest prediction period overlaps with the past prediction period, whereby the latest power demand prediction value can be adopted in the overlapped period, and as a result, the power demand prediction value can be calculated more accurately, and have arrived at the present disclosure.

(1) A power demand prediction method according to an aspect of the present disclosure includes, by a computer, outputting a period prediction value including a power demand prediction value for each unit time in a prediction period by inputting, to a trained model, input data including an actual weather value in a past from the prediction period, an actual power demand value in a past from the prediction period, and a weather forecast value in the prediction period for each of a plurality of unit times defining the prediction period, the weather forecast value being a value acquired for each of the plurality of unit times, and adopting the power demand prediction value output in a second unit time for the power demand prediction value in which the unit time overlaps between the period prediction value output in a first unit time and the period prediction value output in the second unit time after the first unit time among the plurality of unit times defining the prediction period.

According to this configuration, input data including the latest weather forecast value is acquired for each unit time dividing the prediction period, and each time the input data is acquired, the input data is input to the trained model, and the power demand prediction value for each unit time in the prediction period is calculated. As a result, the latest prediction period overlaps with the past prediction periods. As the power demand prediction value in the overlapping period, the latest power demand prediction value is adopted. Therefore, it is possible to suppress a prediction error that occurs when the power demand prediction value is calculated using the trained model in which the actual weather value is used as the explanatory variable at the time of learning and the weather forecast value in the prediction period is used as the explanatory variable at the time of prediction. As a result, the power demand prediction value can be obtained more accurately.

(2) The power demand prediction method according to (1) may further include, when there is a missing time which is a unit time in which calculation of the power demand prediction value has failed in the period prediction value, adopting the power demand prediction value calculated last in a same time zone as the missing time, as the power demand prediction value of the missing time.

For example, the period prediction value may include a missing time in which the calculation of the power demand prediction value fails due to partial missing of the input data. According to this configuration, when there is a missing time, the latest power demand prediction value calculated in the same time zone as the missing time is adopted as the power demand prediction value for the missing time. Therefore, it is possible to prevent missing of the power demand prediction value in the period prediction value.

(3) The power demand prediction method described in (1) or (2) may further include calculating a first error which is an error between the power demand prediction value calculated in a first period in a past from a prediction time point and the actual power demand value in the first period, and when the first error exceeds a threshold, correcting the power demand prediction value in a second period using the first error such that a second error that is the error in the second period in a future from the prediction time point becomes small.

In a case where the first error that is the error between the power demand prediction value and the actual power demand value in the first period in the past from the prediction time point is large, the second error that is the error between the power demand prediction value and the actual power demand value in the second period in the future from the prediction time point is also estimated to be large. According to this configuration, when the first error is larger than the threshold, the power demand prediction value is corrected so that the second error becomes smaller. Therefore, the power demand prediction value can be calculated with higher accuracy in such a situation.

(4) In the power demand prediction method according to (3), the power demand prediction value may not be corrected when the first period extends over a day before.

Since the power demand may greatly change from day to day, when the first period extends over the day before, the power demand may greatly change between the day before and today. Therefore, even if the first error exceeds the threshold, the second error does not necessarily increase in conjunction with the magnitude of the first error. According to this configuration, since the power demand prediction value is not corrected when the first period extends over the day before, it is possible to prevent the accuracy of the power demand prediction value from deteriorating due to the correction.

(5) In the power demand prediction method according to (3) or (4), the second period may be determined in advance based on a full charge time of a storage battery included in equipment for which power demand is to be predicted.

According to this configuration, since the second period is set based on the full charge time of the storage battery included in the equipment, it is possible to avoid a situation in which the power applied when the power of the storage battery is required becomes insufficient.

(6) In the power demand prediction method according to any one of (1) to (5), the input data may further include actual operation information of equipment for which power demand is to be predicted and scheduled operation information of the equipment in the prediction period.

According to this configuration, the actual power demand value can be calculated in consideration of the actual operation and the operation schedule of the equipment.

(7) In the power demand prediction method according to any one of (1) to (6), the trained model may include a plurality of time-dependent trained models for calculating the power demand prediction value in each of the plurality of unit times.

The variation range of the actual power demand value in the unit time is smaller than the variation range of the actual power demand value in the entire prediction period. According to this configuration, since the power demand prediction value is calculated using the plurality of time-dependent trained models for calculating the power demand prediction value in each of the plurality of unit times, the power demand prediction value can be calculated more accurately.

(8) In the power demand prediction method according to (7), output of the power demand prediction value may include generating a feature amount of the input data by classifying the input data according to a category, dividing the feature amount into a plurality of feature amounts according to each of the plurality of time-dependent trained models, calculating the power demand prediction value for each of the unit times by inputting the plurality of feature amounts to a time-dependent trained model according to the plurality of feature amounts, and calculating the period prediction value by integrating the power demand prediction value calculated for each of the unit times.

According to this configuration, since the input data is classified according to the category to generate the feature amount of the input data, the generated feature amount is classified according to each of the plurality of time-dependent trained models, and the classified feature amount is input to the time-dependent trained model, the power demand prediction value for each unit time is calculated, so that the power demand prediction value can be calculated more accurately.

(9) In the power demand prediction method according to (6), the input data may include an actual power demand value for each of the unit times on a day before a prediction time point, and output of the power demand prediction value may include determining whether the prediction time point corresponds to an operating day based on the scheduled operation information, determining whether the day before corresponds to the operating day based on the actual operation information, and inputting the actual power demand value for each of the unit times on the latest operating day to the trained model when the prediction time point corresponds to the operating day and the day before corresponds to a non-operating day.

According to this configuration, when the day before the prediction time point corresponds to the non-operating day and the prediction time point corresponds to the operating day, the power demand prediction value is calculated using the actual power demand value for each unit time on the latest operating day instead of the actual power demand value for each unit time on the day before, so that the power demand prediction value can be calculated more accurately in consideration of the operating day.

(10) In the power demand prediction method according to (6), the input data may include an actual power demand value for each of the unit times on a day before a prediction time point, and calculation of the power demand prediction value may include determining whether the prediction time point corresponds to an operating day based on the scheduled operation information, determining whether the day before corresponds to the operating day based on the actual operation information, and inputting the actual power demand value for each of the unit times on the latest non-operating day to the trained model when the prediction time point corresponds to the non-operating day and the day before corresponds to the operating day.

According to this configuration, when the prediction time point corresponds to the non-operating day and the day before of the prediction time point corresponds to the operating day, the power demand prediction value is calculated using the actual power demand value for each unit time on the latest non-operating day instead of the actual power demand value for each unit time on the day before. Therefore, the power demand prediction value can be calculated more accurately in consideration of the non-operating day.

(11) In the power demand prediction method according to (3), the first error may be a linear weighted average error between the power demand prediction value and the actual power demand value.

According to this configuration, the first error can be accurately estimated.

(12) In the power demand prediction method according to any one of (1) to (11), the trained model may be a model obtained by performing machine learning on training data in which an actual weather value before a reference time point and the actual power demand value before the reference time point are used as explanatory variables and an actual power demand value after the reference time point according to the explanatory variables is used as an objective variable.

According to this configuration, a trained model capable of predicting the power demand prediction value in the prediction period from the actual weather value and the past actual power demand value is obtained.

(13) A power demand prediction device according to another aspect of the present disclosure is a power demand prediction device including a processor, in which the processor is configured to output a period prediction value including a power demand prediction value for each unit time in a prediction period by inputting, to a trained model, input data including an actual weather value in a past from the prediction period, an actual power demand value in a past from the prediction period, and a weather forecast value in the prediction period for each of a plurality of unit times defining the prediction period, the weather forecast value being a value acquired for each of the plurality of unit times, and adopt the power demand prediction value output in a second unit time for the power demand prediction value in which the unit time overlaps between the period prediction value output in a first unit time and the period prediction value output in the second unit time after the first unit time among the plurality of unit times defining the prediction period.

According to this configuration, it is possible to provide a power demand prediction device capable of more accurately calculating a power demand prediction value.

(14) A power demand prediction program according to still another aspect of the present disclosure causes a computer to execute processing of: outputting a period prediction value including a power demand prediction value for each unit time in a prediction period by inputting, to a trained model, input data including an actual weather value in a past from the prediction period, an actual power demand value in a past from the prediction period, and a weather forecast value in the prediction period for each of a plurality of unit times defining the prediction period, the weather forecast value being a value acquired for each of the plurality of unit times, and adopting the power demand prediction value output in a second unit time for the power demand prediction value in which the unit time overlaps between the period prediction value output in a first unit time and the period prediction value output in the second unit time after the first unit time among the plurality of unit times defining the prediction period.

According to this configuration, it is possible to provide a power demand prediction program capable of more accurately calculating a power demand prediction value.

The present disclosure can also be realized as a power demand prediction system that operates by the power demand prediction program. It is needless to say that such a computer program can be distributed via a computer-readable non-transitory recording medium such as a CD-ROM or via a communication network such as the Internet.

Note that an embodiment described below shows one specific example of the present disclosure. Numerical values, shapes, constituent elements, steps, order of steps, and the like of the embodiment below are merely examples, and are not intended to limit the present disclosure. A constituent element not described in an independent claim representing a highest concept among constituent elements in the embodiments below is described as an optional constituent element. In all the embodiments, respective contents can be combined.

(Embodiments)

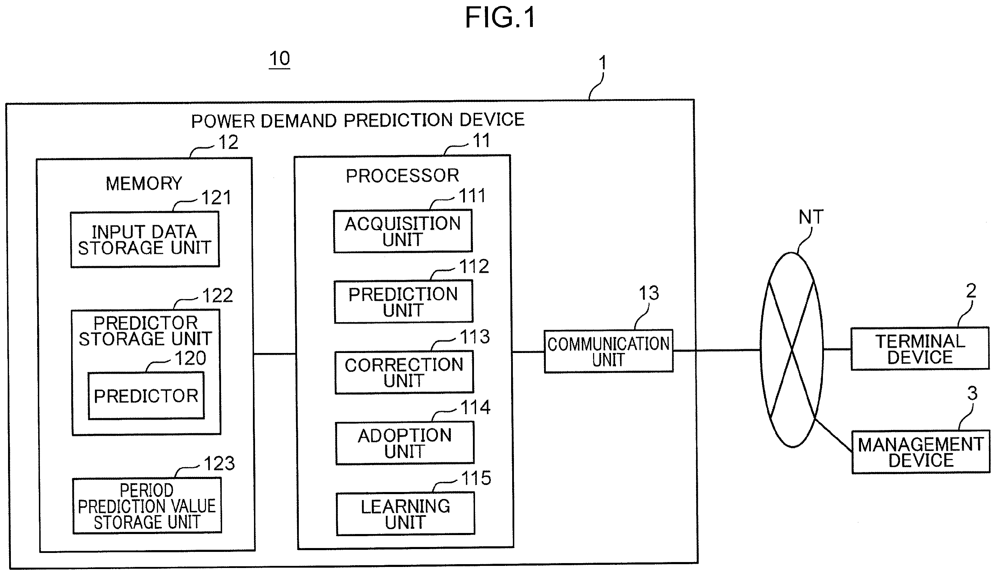

FIG. 1 is a block diagram illustrating an example of an overall configuration of a power demand prediction system 10 according to an embodiment of the present disclosure. The power demand prediction system 10 is a system that predicts power demand in a facility. An example of the facility is a factory including a storage battery. The power demand prediction system 10 includes a power demand prediction device 1, a terminal device 2, and a management device 3. The power demand prediction device 1, the terminal device 2, and the management device 3 are communicably connected via a network NT. As the network NT, for example, a wide-area communication network including the Internet can be employed.

The power demand prediction device 1 includes, for example, a cloud server including one or more computers. However, this is an example, and the power demand prediction device 1 may be configured by an edge side computer mounted on the terminal device 2. Alternatively, the power demand prediction device 1 may be implemented in the management device 3. The terminal device 2 may include, for example, a portable information terminal such as a smartphone or a desktop computer. The management device 3 includes, for example, a computer, and creates, for example, a charging schedule of a storage battery installed in a facility.

The power demand prediction device 1 includes a processor 11, a memory 12, and a communication unit 13. The processor 11 includes, for example, a central processing unit (CPU), and includes an acquisition unit 111, a prediction unit 112, a correction unit 113, an adoption unit 114, and a learning unit 115. The acquisition unit 111 to the learning unit 115 are implemented by the processor 11 executing a power demand prediction program that causes a computer to function as the power demand prediction device 1. However, the acquisition unit 111 to the learning unit 115 are an example, and may be configured by a dedicated hardware circuit.

The acquisition unit 111 acquires input data for each of a plurality of unit times defining the prediction period. The prediction period is a period in which the power demand prediction device 1 predicts a power demand prediction value. The prediction period is, for example, 24 hours. However, this is an example, and an appropriate value such as 48 hours, 12 hours, or 36 hours can be adopted as the prediction period. The unit time is a time obtained by dividing the prediction period for each predetermined time. Examples of the unit time include 1 hour, 2 hours, and 30 minutes. Therefore, when the unit time is one hour, the input data is acquired every hour.

The input data may include an actual power demand value in the past from the prediction period, a weather forecast value in the prediction period, and an actual weather value in the past from the prediction period. The input data may include clock information of a timer. The actual power demand value is an actual value of power actually consumed in the facility at a certain point in time before the prediction period. The actual weather value is an actual value of weather information around the facility at a certain point in time before the prediction period. The weather information includes temperature, humidity, precipitation, weather, and the like. The weather forecast value in the prediction period is a forecast value of weather information around the facility in the prediction period. For example, the temperature, humidity, precipitation, and the like around the facility are weather forecast values. Note that the weather forecast value in the prediction period acquired by the acquisition unit 111 is the latest value acquired for each of the plurality of unit times.

The acquisition unit 111 may acquire the actual power demand value from, for example, a power meter provided in the facility. For example, the acquisition unit 111 may acquire the actual weather value and the weather forecast value from a weather information server connected via the network NT. The actual power demand value, the actual weather value, and the weather forecast value are each provided with a time stamp indicating measurement time. For example, each time the actual power demand value, the actual weather value, and the weather forecast value are acquired, the acquisition unit 111 may store the acquired data in an input data storage unit 121, and may acquire the necessary actual power demand value, actual weather value, and weather forecast value from the input data storage unit 121 according to the time stamp at the timing of calculating the power demand prediction value.

The input data may further include actual operation information and scheduled operation information. The actual operation information is information indicating whether the facility is actually operated for each date. The scheduled operation information is information indicating the operation schedule of the facility for each date.

The acquisition unit 111 may acquire the scheduled operation information and the actual operation information from the management device 3 that manages the facility.

The prediction unit 112 calculates a period prediction value including the power demand prediction value for each unit time in the prediction period by inputting input data to a predictor 120 (an example of a trained model) for each of a plurality of unit times. For example, when the prediction period is 24 hours and the unit time is 1 hour, the period prediction value includes 24 power demand prediction values for the next 24 hours from the prediction time point.

The predictor 120 is a model obtained by performing machine learning on training data in which the actual weather value before the reference time point and the actual power demand value before the reference time point are used as explanatory variables and the actual power demand value after the reference time point according to the explanatory variables is used as an objective variable. The reference time point refers to a time point serving as a starting point of a prediction period set at the time of learning. The actual power demand value after the reference time point according to the explanatory variable is an actual power demand value in the prediction period set at the time of learning. The explanatory variables may include actual operation information and scheduled operation information. The predictor 120 performs machine learning so as to minimize an error between the power demand prediction value for each unit time output when the explanatory variable is input and the actual power demand value in the prediction period which is the objective variable according to the input explanatory variable.

The predictor 120 may include a plurality of time-dependent predictors (an example of a time-dependent trained model) that calculates a power demand prediction value in each of a plurality of unit times. Assuming that the prediction period is 24 hours and the unit time is 1 hour, the predictor 120 includes 24 time-dependent predictors such as a time-dependent predictor that calculates a power demand prediction value of a unit time of 0:00 and, a time-dependent predictor that calculates a power demand prediction value of a unit time of 1:00 and ..., and a time-dependent predictor that calculates a power demand prediction value of a unit time of 23:00 and so on.

The unit time of X hour is defined as Tx. A time-dependent predictor that calculates a power demand prediction value of the unit time Tx is defined as a time-dependent predictor Px. The time-dependent predictor Px is created in advance by machine learning of training data including an explanatory variable input to the time-dependent predictor Px and an actual power demand value at the unit time Tx which is an objective variable corresponding to the explanatory variable. Specifically, the time-dependent predictor Px performs machine learning so as to minimize an error between the power demand prediction value of the unit time Tx output when the explanatory variable is input and the actual power demand value of the unit time Tx as the objective variable corresponding to the input explanatory variable.

As the machine learning model adopted by the predictor 120 and the time-dependent predictor Px, for example, an appropriate model such as random forest, LightGBM, or deep neural network can be adopted.

When there is a missing time which is a unit time for which the calculation of the power demand prediction value has failed in the period prediction value, the prediction unit 112 executes interpolation processing of adopting the latest power demand prediction value calculated at the same time as the missing time as the power demand prediction value of the missing time.

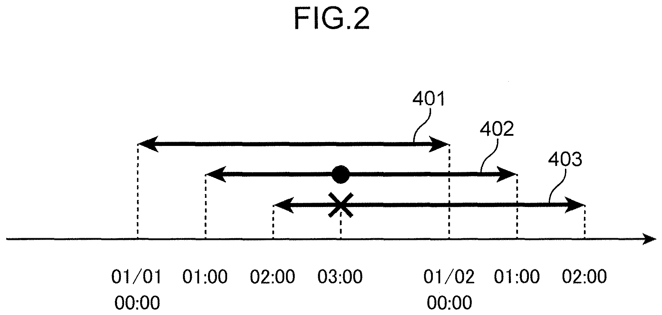

FIG. 2 is an explanatory diagram of interpolation processing. A prediction period 401 is a prediction period for the next 24 hours starting from 0:00 on January 1. A prediction period 402 is a prediction period for the next 24 hours starting from 1:00 on January 1. A prediction period 403 is a prediction period for the next 24 hours starting from 2:00 on January 1. In the prediction period 403, since the power demand prediction value in the 3:00 range has not been calculated due to missing of necessary data or the like, the prediction unit 112 specifies the 3:00 range as the missing time. In this example, a power demand prediction value in the 3:00 range in the prediction period 402 corresponds to the latest power demand prediction value calculated in the same unit time as the missing time zone. Therefore, the prediction unit 112 interpolates the power demand prediction value in the 3:00 range in the prediction period 403 with the power demand prediction value of the 3:00 range in the prediction period 402. As a result, it is possible to prevent missing of the power demand prediction value in the period prediction value.

Refer to FIG. 1. The prediction unit 112 may determine whether the prediction time point corresponds to the operating day based on the scheduled operation information, determine whether the day before the prediction time point corresponds to the operating day based on the actual operation information, and when the prediction time point corresponds to the operating day and the day before corresponds to the non-operating day, input the actual power demand value for each unit time on the latest operating day to the predictor 120 instead of the actual power demand value for each unit time on the day before.

On the other hand, when the prediction time point corresponds to the non-operating day and the day before is the operating day, the prediction unit 112 may input the actual power demand value for each unit time on the latest non-operating day to the predictor 120 instead of the actual power demand value for each unit time on the day before.

The correction unit 113 calculates a first error which is an error between the power demand prediction value in a past first period from the prediction time point and the actual power demand value in the first period. In a case where the first error exceeds the threshold, the correction unit 113 corrects the power demand prediction value in a second period so that a second error, which is an error in the future second period from the prediction time point, becomes smaller.

When the first period extends over the day before, the correction unit 113 may not correct the power demand prediction value. For example, if the first period is 5 hours and the prediction time point is the 3:00 range, since the first period goes beyond the day before, the correction unit 113 does not correct the power demand prediction value. On the other hand, when the prediction time point is the 5:00 range, since the first period is not over the day before, the correction unit 113 corrects the power demand prediction value.

In addition, the correction unit 113 may not correct the power demand prediction value when the second period extends over the next day. For example, when the second period is 3 hours and the prediction time point is the 22:00 range, since the second period extends over the next day, the correction unit 113 does not correct the power demand prediction value. On the other hand, when the second period is 3 hours and the prediction time point is 19:00, since the second period does not extend over the next day, the correction unit 113 corrects the power demand prediction value.

The second period may be determined in advance based on the full charge time of the storage battery included in the equipment. The full charge time is, for example, a charge time of the storage battery required until the SOC changes from 0% to 100%. When the full charge time is 3 hours, the second period is, for example, 3 hours or a value obtained by adding a slight margin to 3 hours. As a result, it is possible to avoid a situation in which the power applied when the power of the storage battery is required becomes insufficient.

Note that the prediction unit 112 may generate the feature amount by classifying the input data according to the category, divide the generated feature amount into a plurality of feature amounts according to each of the plurality of time-dependent predictors Px, calculate the power demand prediction value for each unit time by inputting the plurality of feature amounts to the time-dependent predictor Px according to the plurality of feature amounts, and calculate the period prediction value by integrating the power demand prediction values calculated for each unit time.

Note that, in a case where a mode of inputting the feature amount of the input data to the predictor 120 and calculating the actual power demand value is adopted, the time-dependent predictor Px performs machine learning using the feature amount.

The feature amount is generated by classifying input data into categories of power, weather, operation, and date. The feature amount for each category is referred to as a power feature amount, a weather feature amount, an operation feature amount, and a date feature amount.

The power feature amount is generated by classifying actual power demand values. The power feature amount includes a first power feature amount indicating an actual power demand value Y days before, a second power feature amount indicating an actual power demand value at H o'clock M minutes on the day before, a third power feature amount indicating a rolling average value of actual power demand values classified into each of an operating day and a non-operating day, and a fourth power feature amount indicating a cumulative average value of actual power demand values classified into each of an operating day and a non-operating day. Y is, for example, an integer value of 1 to 14. In this case, the first power feature amount includes actual power demand values from one day before to fourteen days before. H is, for example, an integer value of 1 to 24. M is, for example, any one or more integer values of 1 to 60.

The weather feature amount includes a first weather feature amount indicating the temperature in the prediction period, a second weather feature amount indicating the precipitation in the prediction period, a third weather feature amount indicating the temperature Y days before, and a fourth weather feature amount indicating the temperature at H o'clock M minutes the day before. The first weather feature amount and the second weather feature amount are generated by classifying weather forecast values. The third weather feature amount and the fourth weather feature amount are generated by classifying actual weather values.

The operation feature amount includes a first operation feature amount indicating whether the prediction time point corresponds to an operating day or a non-operating day and a second operation feature amount indicating whether Y days before corresponds to an operating day or a non-operating day. The first operation feature amount is generated by classifying the scheduled operation information, and the second operation feature amount is generated by classifying the actual operation information.

The date feature amount includes a first date feature amount indicating a month to which the prediction time point belongs, a second date feature amount indicating a week to which the prediction time point belongs, and a third date feature amount including a flag indicating a Saturday, Sunday, and holiday. The second date feature amount is represented by a numerical value of 0 to 6 indicating the day of the week such as 0 on Monday, 6 on Sunday, and so on. The first date feature amount to the third date feature amount are specified by using, for example, clock information of a timer.

The adoption unit 114 adopts the power demand prediction value output in the second unit time for the power demand prediction value in which the unit time overlaps between the period prediction value output in the first unit time and the period prediction value output in the second unit time after the first unit time among the plurality of unit times defining the prediction period. An example of the process to be adopted is a process of updating, with the power demand prediction value calculated this time, a power demand prediction value whose unit time overlaps with the period prediction value calculated this time among the period prediction values stored in a period prediction value storage unit 123. An example of the process to be adopted is a process of updating, with the power demand prediction value calculated this time, a power demand prediction value whose unit time overlaps with the period prediction value calculated this time among the period prediction values stored in the memory of the management device 3. An example of the process to be adopted is a process of updating, with the power demand prediction value calculated this time, a power demand prediction value whose unit time overlaps with the period prediction value calculated this time among the period prediction values displayed on the display of the terminal device 2.

The learning unit 115 causes the time-dependent predictor Px constituting the predictor 120 to perform machine learning using the training data. The machine-learned time-dependent predictor Px is stored in the input data storage unit 121.

The memory 12 includes a rewritable nonvolatile storage device such as a solid state drive or a hard disk drive, and includes an input data storage unit 121, a predictor storage unit 122, and a period prediction value storage unit 123. The input data storage unit 121 stores the input data acquired by the acquisition unit 111. The predictor storage unit 122 stores the predictor 120. The period prediction value storage unit 123 stores a period prediction value including the power demand prediction value adopted by the adoption unit 114.

The communication unit 13 is configured with a communication circuit that connects the power demand prediction device 1 to the network NT.

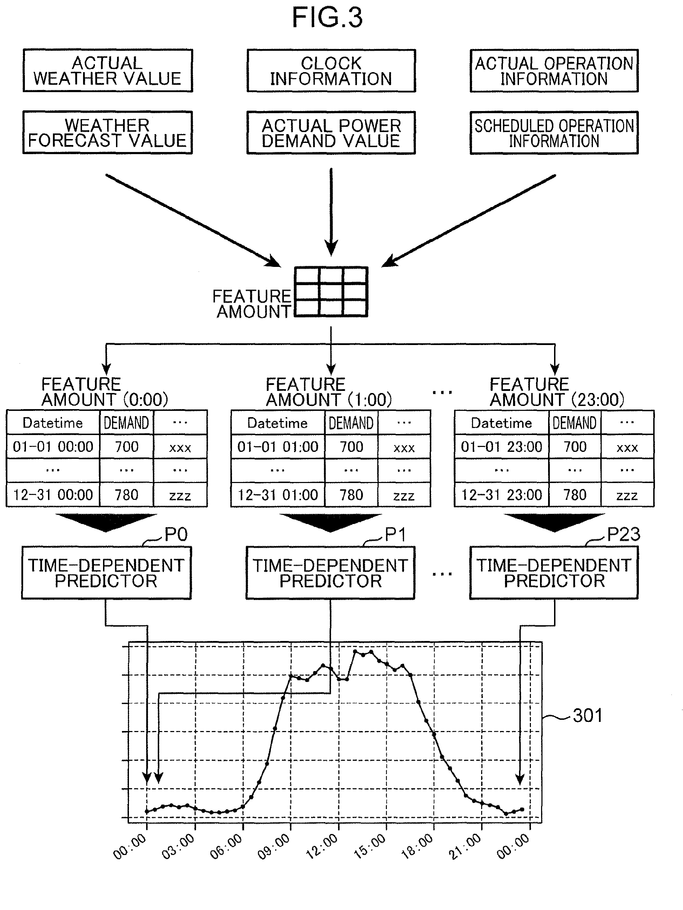

FIG. 3 is a diagram illustrating an outline of processing of the power demand prediction device 1. First, the acquisition unit 111 reads the input data from the input data storage unit 121. The input data includes an actual weather value in the past from the prediction period, a weather forecast value in the prediction period, an actual power demand value in the past from the prediction period, clock information, actual operation information in the past from the prediction period, and scheduled operation information at the prediction time point. Next, the prediction unit 112 generates a feature amount of the input data by classifying these pieces of information for each category. As a result, the first to fourth power feature amounts, the first to fourth weather feature amounts, the first and second operation feature amounts, and the first to third date feature amounts described above are generated.

Next, the prediction unit 112 classifies these feature amounts into a plurality of feature amounts corresponding to each of the time-dependent predictors Px. Here, since there are 24 time-dependent predictors P0 to P23 corresponding to the 0:00 range to the 23:00 range, the feature amount is classified into each of the time-dependent predictors P0 to P23.

For example, actual power demand values in the 1:00 range on each day from 14 days before to one day before are input to the time-dependent predictor P1 as the first power feature amount, and actual power demand values for each hour on the day before are input as the second power feature amount. In addition, the rolling average value of the actual power demand value on the operating day is input to the time-dependent predictor P1 as the third power feature amount when today is the operating day, and the rolling average value of the actual power demand value on the non-operating day is input when today is the non-operating day. In addition, the cumulative average value of the actual power demand value on the operating day is input to the time-dependent predictor P1 as the fourth power feature amount when today is the operating day, and the cumulative average value of the actual power demand value on the non-operating day is input when today is the non-operating day.

In addition, the latest air temperature in the 1:00 range indicated by the weather forecast value is input to the time-dependent predictor P1 as the first weather feature amount, the latest humidity in the 1:00 range indicated by the weather forecast value is input as the second weather feature amount, the air temperature in the 1:00 range on each day from 14 days before to one day before indicated by the actual weather value is input as the third weather feature amount, and the air temperature for each hour on the day before indicated by the actual weather value is input as the fourth weather feature amount.

Furthermore, information indicating that the prediction time point is an operating day or a non-operating day is input to the time-dependent predictor P1 as the first operation feature amount, and information indicating whether each day from 14 days before to one day before is an operating day or a non-operating day is input as the second operation feature amount.

In addition, the month to which the prediction time point belongs is input to the time-dependent predictor P1 as the first date feature amount, the day of the week to which the prediction time point belongs is input as the second date feature amount, and a flag indicating whether the prediction time point is on Saturday, Sunday, or holiday is input as the third date feature amount.

Next, the prediction unit 112 causes the time-dependent predictor Px to calculate a power demand prediction value at the unit time Tx.

Next, the prediction unit 112 integrates the power demand prediction values calculated by the time-dependent predictors P0 to P23 to calculate a period prediction value. Each point on the graph 301 indicates 24 power demand prediction values calculated by the time-dependent predictors P0 to P23. In the graph 301, the vertical axis represents the actual power demand value, and the horizontal axis represents time. The prediction unit 112 calculates a period prediction value including the power demand prediction value for the next 24 hours by arranging the 24 power demand prediction values in chronological order from the prediction time point.

Next, the adoption unit 114 adopts the power demand prediction value calculated by the prediction unit 112 for the power demand prediction value whose unit time overlaps with the period prediction value calculated by the prediction unit 112 among the period prediction values stored in the period prediction value storage unit 123.

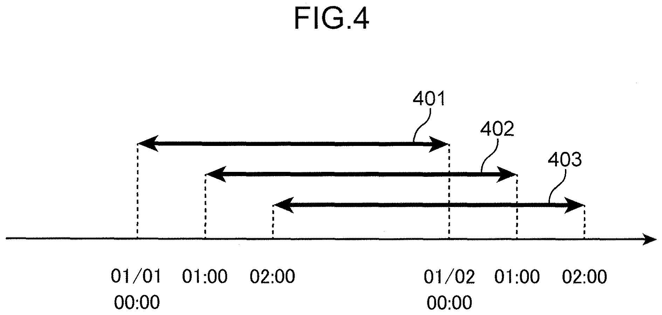

FIG. 4 is a graph illustrating a relationship between a plurality of prediction periods. The prediction periods 401 to 403 are the same as the prediction periods 401 to 403 illustrated in FIG. 2. The predictor 120 uses an actual weather value as an explanatory variable at the time of learning, and uses a weather forecast value in a prediction period as an explanatory variable at the time of prediction. Therefore, a prediction error occurs in the power demand prediction value calculated by the predictor. In general, weather forecast values in the near future are considered to have higher accuracy. Therefore, the power demand prediction device 1 calculates the power demand prediction values in the prediction periods 401 to 403 for the next 24 hours, for example, every 1 hour while acquiring the latest weather forecast value. As a result, the latest prediction period 403 overlaps with the past prediction periods 401 and 402.

As the power demand prediction value in the overlapping period, the power demand prediction value in the prediction period 403 is adopted. As a result, the power demand prediction device 1 can calculate the power demand prediction value more accurately as compared with a mode in which the power demand prediction values in the prediction periods for 24 hours are calculated at a time without overlapping the prediction periods.

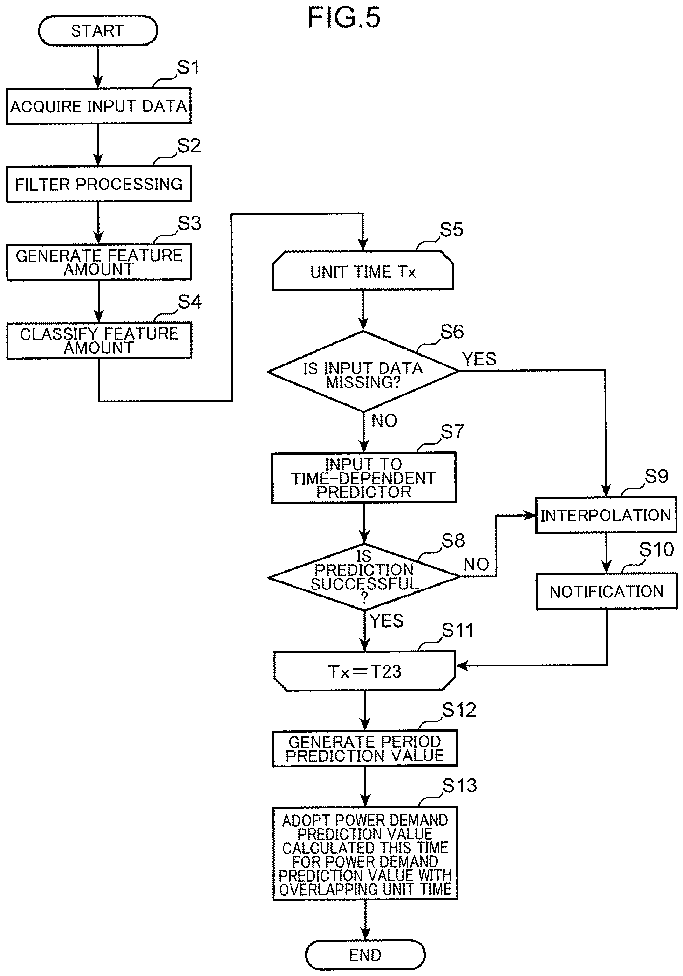

FIG. 5 is a flowchart showing an example of processing of the power demand prediction device 1. This flowchart is started, for example, at a predetermined prediction time point. The prediction time point is, for example, any time point within the unit time Tx. Therefore, this flowchart is executed every unit time Tx.

First, in step S1, the acquisition unit 111 acquires input data from the input data storage unit 121. Here, the input data to be input to the time-dependent predictor Px is acquired from the input data stored in the input data storage unit 121. The input data also includes clock information by a timer.

Next, in step S2, the prediction unit 112 performs filter processing on the input data. As the filter process, for example, a process of averaging the input data so that the time intervals of the time stamps added to the input data are aligned at constant time intervals is adopted. An example of the constant time interval is one hour. However, this is an example, and an appropriate value such as 30 minutes can be adopted as the constant time interval.

Next, in step S3, the prediction unit 112 classifies the input data according to the category as described above, and generates the feature amount using the classified input data.

Next, in step S4, the prediction unit 112 classifies the feature amount generated in step S3 into a plurality of time-dependent feature amounts input to each of the time-dependent predictors P0 to P23.

Next, the prediction unit 112 executes a process of calculating a power demand prediction value for each unit time Tx (steps S5 to S11). Here, the process of calculating the power demand prediction value from Tx = T0 to T23, that is, from the 0:00 range to the 23:00 range is sequentially executed.

First, in step S5, the prediction unit 112 sets the unit time Tx.

Next, in step S6, the prediction unit 112 determines whether the input data is missing. For example, when the actual power demand value in the 1:00 range on any day of each day from 14 days before to one day before is missing in the first power feature amount input to the time-dependent predictor P1, the prediction unit 112 determines that the input data is missing. For example, in a case where a temperature in the 1:00 range is missing in the first weather feature amount input to the time-dependent predictor P1, the prediction unit 112 determines that the input data is missing. When it is determined that the input data is missing (YES in step S6), the process proceeds to step S9, and when it is determined that the input data is not missing (NO in step S6), the process proceeds to step S7.

Next, in step S7, the prediction unit 112 calculates the power demand prediction value of the unit time Tx by inputting the time-dependent feature amount classified in step S4 to the time-dependent predictor Px. For example, the time-dependent feature amount classified into the time-dependent predictor P1 is input to the time-dependent predictor P1, and the power demand prediction value in the 1:00 range is calculated.

Note that, in step S7, in a case where the prediction time point belongs to the operating day and the day before the prediction time point belongs to the non-operating day, the prediction unit 112 may adopt the actual power demand value at H o'clock M minutes on the latest operating day as the second power feature amount and input the actual power demand value to the time-dependent predictor Px. Further, in step S7, in a case where the prediction time point belongs to the non-operating day and the day before the prediction time point belongs to the operating day, the prediction unit 112 may adopt the actual power demand value at H o'clock M minutes on the latest non-operating day as the second power feature amount and input the actual power demand value to the time-dependent predictor Px.

Next, in step S8, the prediction unit 112 determines whether the prediction of the power demand prediction value has succeeded. For example, the prediction unit 112 may determine that the prediction of the power demand prediction value has failed when the power demand prediction value has not been output from the time-dependent predictor Px due to some cause such as a processing error or when the power demand prediction value output from the time-dependent predictor Px clearly indicates a numerical value indicating an error.

When it is determined that the prediction of the power demand prediction value has succeeded (YES in step S8), the process proceeds to step S11, and when it is determined that the prediction of the power demand prediction value has failed (NO in step S8), the process proceeds to step S9.

Next, in step S9, the prediction unit 112 executes the interpolation processing described with reference to FIG. 2, and adopts the latest measured power demand value calculated at the same time as the missing time as the power demand prediction value for the missing time.

Next, in step S10, the prediction unit 112 generates notification information indicating that the period prediction value output in step S13 includes the interpolated power demand prediction value, and notifies the notification information. For example, the prediction unit 112 may notify the manager of the equipment of the notification information by outputting the notification information to the management device 3. When the process of Step S10 ends, the process proceeds to Step S11.

In step S11, when the process of calculating the final unit time T23, that is, the power demand prediction value in the 23:00 range is ended, the process proceeds to step S12. On the other hand, in step S11, in a case where the process of calculating the power demand prediction value at the final unit time T23 is not ended, the process returns to step S5, and the process of calculating the power demand prediction value at the next unit time Tx is executed.

Next, in step S12, the prediction unit 112 arranges the power demand prediction values calculated for each unit time Tx in time series from the prediction time point to integrate the power demand prediction values, and generates a period prediction value including the power demand prediction value for the next 24 hours from the prediction time point.

Next, in step S13, the adoption unit 114 adopts the power demand prediction value included in the period prediction value calculated this time for the power demand prediction value in which the unit time overlaps with the power demand prediction value included in the period prediction value calculated this time among the power demand prediction values included in the period prediction value calculated in the unit time before the prediction time point. Referring to FIG. 4, it is assumed that the period prediction value calculated this time is the period prediction value calculated in the prediction period 403. In this case, the adoption unit 114 adopts the power demand prediction value calculated in the prediction period 403 for the power demand prediction value from the 2:00 range on January 1 to the 1:00 range on January 2 among the period prediction values stored in the period prediction value storage unit 123.

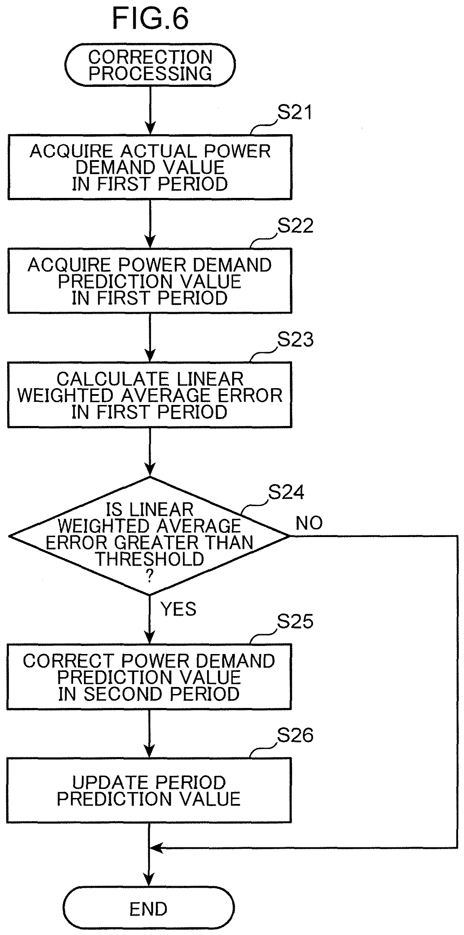

FIG. 6 is a flowchart illustrating an example of correction processing by the correction unit 113. This flowchart is executed each time the period prediction value is calculated.

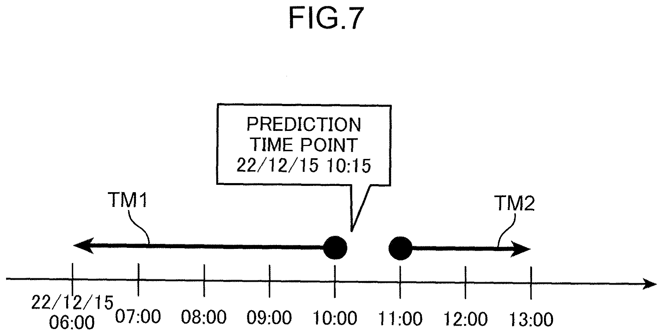

First, in step S21, the correction unit 113 acquires, from the input data storage unit 121, the actual power demand value in the first period in the past from the prediction time point. FIG. 7 is an explanatory diagram of correction processing. In this example, the prediction time point is 10:15 on December 15, 2022. In this example, the first period TM1 is five hours. Therefore, five actual power demand values are calculated from the 6:00 range to the 10:00 range on the same day.

Next, in step S22, the correction unit 113 acquires the power demand prediction value in the first period TM1 from the period prediction value storage unit 123. Refer to FIG. 7. In this case, five power demand prediction values from the 6:00 range to the 10:00 range on the same day are acquired. As the power demand prediction value acquired here, the latest power demand prediction value is adopted. For example, the power demand prediction value calculated at the prediction time point in the 6:00 range is adopted as the power demand prediction value in the 7:00 range, and the power demand prediction value calculated at the prediction time point in the 7:00 range is adopted as the power demand prediction value in the 8:00 range.

Next, in step S23, the correction unit 113 calculates a linear weighted average error between the actual power demand value and the power demand prediction value in the first period TM1. The linear weighted average error is a value obtained by linearly weighted averaging five errors for the same unit time Tx in the five actual power demand values and the five power demand prediction values included in the first period TM1.

The linear weighted average error $\mu_t$ is expressed by the following Expression (1). In addition, $e_t$ in Expression (1) is represented by Expression (2).

[Math. 1]

$$\mu_t = \frac{\sum_{i=1}^{n}(n - i + 1)e_{t-i+1}}{n(n + 1)/2} \tag{1}$$

$$e_t = \frac{y_t' - y_t}{\max(y_t, y_t)} \tag{2}$$

$$y_t^{mod} = y_t' - (y_t' \times \mu_{t-1}) \tag{3}$$

Here, t is an index for specifying the unit time Tx. n is an index that defines the first period TM1, and n = 5 in the example of FIG. 7. $y_t'$ is a power demand prediction value in the t o'clock range, and $y_t$ is an actual power demand value in the t o'clock range. $\max(y_t', y_t)$ is the larger value of $y_t'$ and $y_t$.

Next, in step S24, the correction unit 113 determines whether the linear weighted average error $\mu_t$ is larger than a threshold. In a case where the linear weighted average error $\mu_t$ is larger than the threshold (YES in step S24), the process proceeds to step S25, and in a case where the linear weighted average error $\mu_t$ is equal to or smaller than the threshold (NO in step S24), there is no need for correction, and thus the correction processing ends.

Next, in step S25, the correction unit 113 corrects the power demand prediction value included in the second period TM2 using the linear weighted average error $\mu_t$. Here, the power demand prediction value is corrected using Expression (3). $y_t^{mod}$ is a corrected power demand prediction value in the t o'clock range. The linear weighted average error $\mu_{t-1}$ is a linear weighted average error at a unit time of t-1. The linear weighted average error $\mu_{t-1}$ takes a positive value when the power demand prediction value $y_t'$ fluctuates upward with respect to the actual power demand value $y_t$, and takes a negative value when the power demand prediction value $y_t'$ fluctuates downward with respect to the actual power demand value $y_t$. Therefore, according to Expression (3), when the power demand prediction value $y_t'$ fluctuates upward with respect to the actual power demand value $y_t$, the power demand prediction value $y_t'$ is corrected downward, and when the power demand prediction value $y_t'$ fluctuates downward with respect to the actual power demand value $y_t$, the power demand prediction value $y_t'$ is corrected upward.

In the example of FIG. 7, since the second period TM2 is 3 hours, three power demand prediction values $y_t'$ from the 11:00 range to the 13:00 range are corrected.

Next, in step S26, the correction unit 113 updates the latest period prediction value with the corrected power demand prediction value $y_t^{mod}$. Then, the updated period prediction value is output.

Note that the correction unit 113 may not execute the correction processing in a case where the first period TM1 extends over the day before. For example, in a case where the prediction time point is 3:15, since the first period TM1 is the 23:00 range, the 0:00 range, the 1:00 range, the 2:00 range, and the 3:00 range, the day before is crossed. On the other hand, when the prediction time point is 4:15, since the first period TM1 is the 0:00 range, the 1:00 range, the 2:00 range, the 3:00 range, and the 4:00 range, there is no crossing over the day before. Therefore, in a case where the prediction time point is before 4:00, the correction unit 113 does not execute the correction processing.

Furthermore, the correction unit 113 may not execute the correction processing in a case where the second period TM2 extends over the next day. For example, in a case where the prediction time point is 21:15, the second period TM2 is the 22:00 range, the 23:00 range, and the 0:00 range, and thus the next day is crossed. On the other hand, when the prediction time point is 20:15, the second period TM2 is the 21:00 range, the 22:00 range, and the 23:00 range, and thus the next day is not crossed. Therefore, the correction unit 113 does not execute the correction processing when the prediction time point is 21:00 or later. In summary, the correction unit 113 executes the correction processing in a case where the prediction time point belongs to the period from after 4:00 to before 21:00.

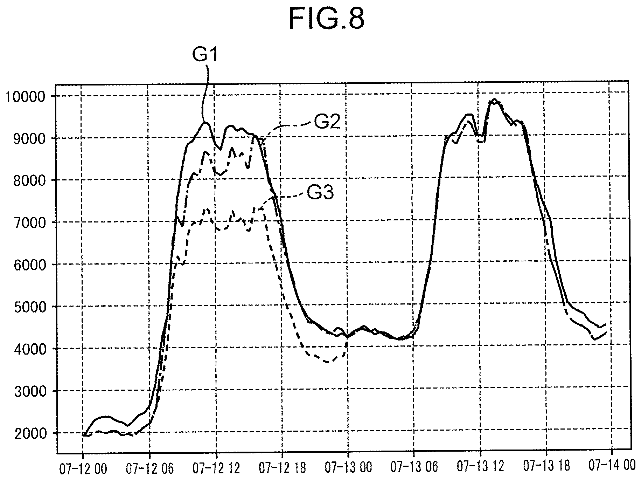

FIG. 8 is a graph for explaining the correction processing. In FIG. 8, the vertical axis represents power, and the horizontal axis represents time. For example, in the time axis, "07_12 00" indicates 0:00 on July 12, and "07_12 06" indicates 6:00 on July 12. A solid line G1 indicates an actual power demand value, an alternate long and short dash line G2 indicates a power demand prediction value after correction, and a dotted line G3 indicates a power demand prediction value before correction.

In this example, since the moving average error between the power demand prediction value and the actual power demand value is larger than the threshold in the period from 0:00 to 6:00 on July 12, the power demand prediction value indicated by the graph G3 is corrected as indicated by the graph G2 after 6:00 on July 12. Therefore, after 6:00 on July 12, the graph G2 indicating the corrected power demand prediction value substantially matches the graph G1 indicating the actual power demand value, and it can be confirmed that the prediction accuracy of the power demand prediction value is improved.

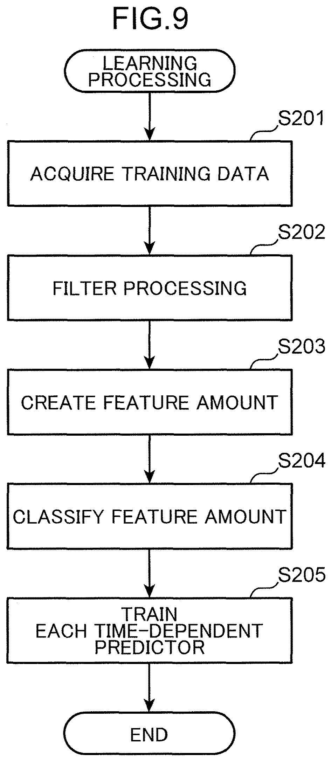

Next, learning processing will be described. FIG. 9 is a flowchart illustrating an example of learning processing of the time-dependent predictor Px. This flowchart is executed, for example, in an initial state and at an update timing of the time-dependent predictor Px. The initial state refers to a state in which the time-dependent predictor Px is not generated. Assuming that the time-dependent predictor Px is updated once a day, the update timing is executed, for example, at a predetermined time (for example, 0:00) of the day.

First, in step S201, the learning unit 115 acquires input data necessary for learning from the input data storage unit 121 as training data. In the initial state, for example, the input data for the past one year is acquired, and in the update timing, for example, the input data up to 14 days before is acquired as the training data in consideration of the fact that the data up to 14 days before of the first power feature amount and the third weather feature amount is required.

Next, in step S202, the learning unit 115 performs filter processing on the training data. As the filter processing, for example, a process of averaging the training data so that the time intervals of the time stamps added to the training data are aligned at constant time intervals is adopted.

Next, in step S203, the learning unit 115 classifies the training data after the filter processing for each category, and calculates a feature amount from the classified training data. As a result, the first to fourth power feature amounts, the first to fourth weather feature amounts, the first and second operation feature amounts, and the first to third date feature amounts described above are calculated. Note that, since the weather forecast value is not used at the time of learning, the actual weather value in the prediction period is used as the first and second weather feature amounts instead of the weather forecast value in the prediction period.

Next, in step S204, the learning unit 115 divides the feature amount calculated in step S203 into a plurality of time-dependent feature amounts corresponding to the respective time-dependent predictors P0 to P23.

Next, in step S205, the learning unit 115 causes the time-dependent predictors P0 to P23 to perform machine learning. For example, the learning unit 115 inputs the time-dependent feature amount corresponding to the time-dependent predictor Px and outputs the power demand prediction value at the unit time Tx. The learning unit 115 corrects the parameter of the time-dependent predictor Px such that an error between the power demand prediction value output from the time-dependent predictor Px and the actual power demand value at the unit time Tx is minimized.

Thus, the time-dependent predictor Px is learned. The time-dependent predictor Px subjected to the learning processing is stored in the predictor storage unit 122.

As described above, according to the present embodiment, the input data is acquired for each unit time dividing the prediction period, the input data is input to the predictor 120 every time the input data is acquired, and the power demand prediction value for each unit time Tx in the prediction period is calculated. As a result, the latest prediction period and the past prediction period overlap with each other, whereby the latest power demand prediction value can be adopted in the overlapping period. Therefore, it is possible to suppress a prediction error caused when the power demand prediction value is calculated using the predictor 120 in which the actual weather value is used at the time of learning and the weather forecast value is used at the time of prediction, and it is possible to more accurately obtain the power demand prediction value.

Note that the present embodiment can adopt the following modifications.

In the above embodiment, the 23 time-dependent predictors Px calculate the 23 power demand prediction values, but this is merely an example, and one predictor 120 may calculate the 23 power demand prediction values.

**Industrial Applicability**

The present disclosure is useful in the technical field of predicting power demand in facilities.

**Claims**

1. A power demand prediction method comprising:

   by a computer,
   outputting a period prediction value including a power demand prediction value for each unit time in a prediction period by inputting, to a trained model, input data including an actual weather value in a past from the prediction period, an actual power demand value in a past from the prediction period, and a weather forecast value in the prediction period for each of a plurality of unit times defining the prediction period,
   the weather forecast value being a value acquired for each of the plurality of unit times; and
   adopting the power demand prediction value output in a second unit time for the power demand prediction value in which the unit time overlaps between the period prediction value output in a first unit time and the period prediction value output in the second unit time after the first unit time among the plurality of unit times defining the prediction period.

2. The power demand prediction method according to claim 1, further comprising, when there is a missing time which is a unit time in which calculation of the power demand prediction value has failed in the period prediction value, adopting the power demand prediction value calculated last in a same time zone as the missing time, as the power demand prediction value of the missing time.

3. The power demand prediction method according to claim 1 or 2, further comprising:

   calculating a first error which is an error between the power demand prediction value calculated in a first period in a past from a prediction time point and the actual power demand value in the first period; and
   when the first error exceeds a threshold, correcting the power demand prediction value in a second period using the first error such that a second error that is the error in the second period in a future from the prediction time point becomes small.

4. The power demand prediction method according to claim 3, wherein the power demand prediction value is not corrected when the first period extends over a day before.

5. The power demand prediction method according to claim 3, wherein the second period is determined in advance based on a full charge time of a storage battery included in equipment for which power demand is to be predicted.

6. The power demand prediction method according to claim 1 or 2, wherein the input data further includes actual operation information of equipment for which power demand is to be predicted and scheduled operation information of the equipment in the prediction period.

7. The power demand prediction method according to claim 1 or 2, wherein the trained model includes a plurality of time-dependent trained models for calculating the power demand prediction value in each of the plurality of unit times.

8. The power demand prediction method according to claim 7, wherein
   output of the power demand prediction value includes:

   generating a feature amount of the input data by classifying the input data according to a category;
   dividing the feature amount into a plurality of feature amounts according to each of the plurality of time-dependent trained models;

calculating the power demand prediction value for each of the unit times by inputting the plurality of feature amounts to a time-dependent trained model according to the plurality of feature amounts; and

calculating the period prediction value by integrating the power demand prediction value calculated for each of the unit times.

9. The power demand prediction method according to claim 6, wherein

the input data includes an actual power demand value for each of the unit times on a day before a prediction time point, and

output of the power demand prediction value includes:

determining whether the prediction time point corresponds to an operating day based on the scheduled operation information;

determining whether the day before corresponds to the operating day based on the actual operation information; and

inputting the actual power demand value for each of the unit times on the latest operating day to the trained model when the prediction time point corresponds to the operating day and the day before corresponds to a non-operating day.

10. The power demand prediction method according to claim 6, wherein

the input data includes an actual power demand value for each of the unit times on a day before a prediction time point, and

calculation of the power demand prediction value includes:

determining whether the prediction time point corresponds to an operating day based on the scheduled operation information;

determining whether the day before corresponds to the operating day based on the actual operation information; and

inputting the actual power demand value for each of the unit times on the latest non-operating day to the trained model when the prediction time point corresponds to the non-operating day and the day before corresponds to the operating day.

11. The power demand prediction method according to claim 3, wherein the first error is a linear weighted average error between the power demand prediction value and the actual power demand value.

12. The power demand prediction method according to claim 1 or 2, wherein the trained model is a model obtained by performing machine learning on training data in which an actual weather value before a reference time point and the actual power demand value before the reference time point are used as explanatory variables and an actual power demand value after the reference time point according to the explanatory variables is used as an objective variable.

13. A power demand prediction device comprising a processor,
wherein the processor is configured to:

output a period prediction value including a power demand prediction value for each unit time in a prediction period by inputting, to a trained model, input data including an actual weather value in a past from the prediction period, an actual power demand value in a past from the prediction period, and a weather forecast value in the prediction period for each of a plurality of unit times defining the prediction period,

the weather forecast value being a value acquired for each of the plurality of unit times, and

adopt the power demand prediction value output in a second unit time for the power demand prediction value in which the unit time overlaps between the period prediction value output in a first unit time and the period prediction value output in the second unit time after the first unit time among the plurality of unit times defining the prediction period.

14. A power demand prediction program for causing a computer to execute processing of:

outputting a period prediction value including a power demand prediction value for each unit time in a prediction period by inputting, to a trained model, input data including an actual weather value in a past from the prediction period, an actual power demand value in a past from the prediction period, and a weather forecast value in the prediction period for each of a plurality of unit times defining the prediction period,

the weather forecast value being a value acquired for each of the plurality of unit times, and

adopting the power demand prediction value output in a second unit time for the power demand prediction value in which the unit time overlaps between the period prediction value output in a first unit time and the period prediction value output in the second unit time after the first unit time among the plurality of unit times defining the prediction period.

# FIG.1

POWER DEMAND PREDICTION DEVICE 1

10

**MEMORY** 12

- INPUT DATA STORAGE UNIT 121
- PREDICTOR STORAGE UNIT 122
  - PREDICTOR 120
- PERIOD PREDICTION VALUE STORAGE UNIT 123

**PROCESSOR** 11

- ACQUISITION UNIT 111
- PREDICTION UNIT 112
- CORRECTION UNIT 113
- ADOPTION UNIT 114
- LEARNING UNIT 115

COMMUNICATION UNIT 13

NT

TERMINAL DEVICE 2

MANAGEMENT DEVICE 3

# FIG.2

401

402

403

01/01    01:00    02:00    03:00    01/02    01:00    02:00
00:00                                00:00

# FIG.3

| ACTUAL WEATHER VALUE | CLOCK INFORMATION | ACTUAL OPERATION INFORMATION |

| WEATHER FORECAST VALUE | ACTUAL POWER DEMAND VALUE | SCHEDULED OPERATION INFORMATION |

FEATURE AMOUNT

**FEATURE AMOUNT (0:00)**

| Datetime | DEMAND | ... |
|---|---|---|
| 01-01 00:00 | 700 | xxx |
| ... | ... | ... |
| 12-31 00:00 | 780 | zzz |

P0

TIME-DEPENDENT PREDICTOR

**FEATURE AMOUNT (1:00)**

| Datetime | DEMAND | ... |
|---|---|---|
| 01-01 01:00 | 700 | xxx |
| ... | ... | ... |
| 12-31 01:00 | 780 | zzz |

P1

TIME-DEPENDENT PREDICTOR

...

**FEATURE AMOUNT (23:00)**

| Datetime | DEMAND | ... |
|---|---|---|
| 01-01 23:00 | 700 | xxx |
| ... | ... | ... |
| 12-31 23:00 | 780 | zzz |

P23

TIME-DEPENDENT PREDICTOR

301

00:00  03:00  06:00  09:00  12:00  15:00  18:00  21:00  00:00

# FIG.4

401

402

403

01/01
00:00

01:00

02:00

01/02
00:00

01:00

02:00

# FIG.5

START

ACQUIRE INPUT DATA — S1

FILTER PROCESSING — S2

GENERATE FEATURE AMOUNT — S3

CLASSIFY FEATURE AMOUNT — S4

UNIT TIME Tx — S5

IS INPUT DATA MISSING? — S6

YES → INTERPOLATION — S9 → NOTIFICATION — S10

NO

INPUT TO TIME-DEPENDENT PREDICTOR — S7

IS PREDICTION SUCCESSFUL? — S8

NO → INTERPOLATION

YES

Tx＝T23 — S11

GENERATE PERIOD PREDICTION VALUE — S12

ADOPT POWER DEMAND PREDICTION VALUE CALCULATED THIS TIME FOR POWER DEMAND PREDICTION VALUE WITH OVERLAPPING UNIT TIME — S13

END

# FIG.6

CORRECTION
PROCESSING

↓

S21

ACQUIRE ACTUAL POWER
DEMAND VALUE
IN FIRST PERIOD

↓

S22

ACQUIRE POWER DEMAND
PREDICTION VALUE
IN FIRST PERIOD

↓

S23

CALCULATE LINEAR
WEIGHTED AVERAGE ERROR
IN FIRST PERIOD

↓

S24

IS LINEAR
WEIGHTED AVERAGE
ERROR GREATER THAN
THRESHOLD
?

NO →

YES

↓

S25

CORRECT POWER DEMAND
PREDICTION VALUE
IN SECOND PERIOD

↓

S26

UPDATE PERIOD
PREDICTION VALUE

↓

END

# FIG.7

PREDICTION
TIME POINT
22/12/15 10:15

TM1

TM2

22/12/15
06:00   07:00   08:00   09:00   10:00   11:00   12:00   13:00

# FIG.8

# FIG.9

LEARNING
PROCESSING

ACQUIRE TRAINING DATA — S201

FILTER PROCESSING — S202

CREATE FEATURE AMOUNT — S203

CLASSIFY FEATURE AMOUNT — S204

TRAIN
EACH TIME-DEPENDENT
PREDICTOR — S205

END

## INTERNATIONAL SEARCH REPORT

| International application No. |
| --- |
| **PCT/JP2024/023158** |

| A. | CLASSIFICATION OF SUBJECT MATTER |
| --- | --- |

*H02J 3/00*(2006.01)i
FI:  H02J3/00 130; H02J3/00 170

According to International Patent Classification (IPC) or to both national classification and IPC

| B. | FIELDS SEARCHED |
| --- | --- |

Minimum documentation searched (classification system followed by classification symbols)

H02J3/00; G06Q50/06

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| A | JP 2023-010235 A (OSAKI ELECTRIC CO., LTD.) 20 January 2023 (2023-01-20) entire text, all drawings | 1-14 |
| A | JP 2020-137379 A (MITSUBISHI HITACHI POWER SYSTEMS, LTD.) 31 August 2020 (2020-08-31) entire text, all drawings | 1-14 |
| A | JP 2020-205692 A (DAIWA HOUSE INDUSTRY CO., LTD.) 24 December 2020 (2020-12-24) entire text, all drawings | 1-14 |
| A | JP 6338008 B1 (FUJI ELECTRIC CO., LTD.) 06 June 2018 (2018-06-06) entire text, all drawings | 1-14 |

☐ Further documents are listed in the continuation of Box C.       ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **08 August 2024** | **20 August 2024** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (July 2022)

**INTERNATIONAL SEARCH REPORT**
Information on patent family members

International application No.

**PCT/JP2024/023158**

| Patent document cited in search report | | | Publication date (day/month/year) | Patent family member(s) | | | Publication date (day/month/year) |
|---|---|---|---|---|---|---|---|
| JP | 2023-010235 | A | 20 January 2023 | (Family: none) | | | |
| JP | 2020-137379 | A | 31 August 2020 | (Family: none) | | | |
| JP | 2020-205692 | A | 24 December 2020 | (Family: none) | | | |
| JP | 6338008 | B1 | 06 June 2018 | JP | 2019-115131 | A | |

Form PCT/ISA/210 (patent family annex) (July 2022)

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2016185059 A